(19) Europäisches Patentamt
European Patent Office
Office européen des brevets

(11) **EP 4 764 587 A1**

(12) **EUROPEAN PATENT APPLICATION**
published in accordance with Art. 153(4) EPC

(43) Date of publication:
**24.06.2026 Bulletin 2026/26**

(51) International Patent Classification (IPC):
**G01S 5/02** (2010.01)

(21) Application number: **24884068.8**

(86) International application number:
**PCT/CN2024/108105**

(22) Date of filing: **29.07.2024**

(87) International publication number:
**WO 2025/092061 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.10.2023 CN 202311422013**

(71) Applicants:
• **Comac Beijing Aircraft Technology Research
Institute
Beijing 102200 (CN)**
• **Commercial Aircraft Corporation Of China Ltd
Shanghai 200131 (CN)**

(72) Inventors:
• **SUI, Zheng
Beijing 102200 (CN)**
• **BAI, Zhiqiang
Beijing 102200 (CN)**
• **XUE, Yong
Beijing 102200 (CN)**
• **ZHAO, Guangtao
Beijing 102200 (CN)**
• **LI, Chaoqun
Beijing 102200 (CN)**
• **YU, Fengwei
Beijing 102200 (CN)**

(74) Representative: **Gille Hrabal
Partnerschaftsgesellschaft mbB
Patentanwälte
Brucknerstraße 20
40593 Düsseldorf (DE)**

(54) **METHOD AND APPARATUS FOR CALCULATING AIRCRAFT POSITION INFORMATION, AND DEVICE AND STORAGE MEDIUM**

(57) A method and an apparatus for calculating position information of aircraft, a computer device, and a storage medium, which are related to the technical field of avionics and for improving accuracy of calculating the position information of the aircraft. The method comprises: obtaining first Gauss-Krüger coordinates and second Gauss-Krüger coordinates, each of which corresponds to a respective one of two distance measure DMEs; obtaining a first horizontal projection distance and a second horizontal projection distance, each of which is a horizontal projection of a slant distance between the aircraft and a respective one of the two DMEs; calculating Gauss-Krüger coordinates of the aircraft according to the first Gauss-Krüger coordinates, the second Gauss-Krüger coordinates, the first horizontal projection distance, and the second horizontal projection distance; and converting the Gauss-Krüger coordinates of the aircraft into current latitude-longitude coordinates of the aircraft.

Obtain first Gauss-Krüger coordinates and second Gauss-Krüger coordinates, each of which corresponds to a respective one of two DMEs, and obtain a first horizontal projection distance and a second horizontal projection distance, each of which is a horizontal projection of a slant distance between the aircraft and a respective one of the two DMEs — S101

Calculate Gauss-Krüger coordinates of the aircraft according to the first Gauss-Krüger coordinates, the second Gauss-Krüger coordinates, the first horizontal projection distance, and the second horizontal projection distance — S102

Convert the Gauss-Krüger coordinates of the aircraft into current latitude-longitude coordinates of the aircraft — S103

**FIG. 1**

**Description**

**TECHNICAL FIELD**

The present disclosure relates to the technical field of avionics, and in particular to a method and an apparatus for calculating position information of aircraft, a device, and a storage medium.

**BACKGROUND**

Radio navigation system is a widely used navigation system that uses radio techniques to measure navigation parameters. Generally, a radio navigation module comprises a very-high-frequency omnidirectional range (VOR) and distance measure equipment (DME) and can provide position and/or bearing information independently for aircraft. The main function of the DME is to provide the pilot with a slant distance of the aircraft to a ground DME station. The DME comprises two parts: a ground DME beacon and a DME interrogator. The slant distance from the aircraft to the ground beacon is measured in an interrogating-transponding manner, which is similar to a satellite navigation system: the best navigation station is selected first, and then the aircraft is positioned using the navigation station. The DME/DME positioning refers to using two or more DME beacons for the positioning, where the position of the aircraft is calculated according to the respective measured distance from the aircraft to each DME beacon and the position information of the DME beacons.

When the radio navigation calculates a position under the DME/DME mode, accuracy of the calculation depends greatly on an algorithm utilized by a calculation module of a flight management system. As airborne navigation equipment iterates rapidly, the accuracy of the DME navigation station has been greatly improved, and hence algorithms capable of high-precision positioning are particularly important for further improvement of the accuracy of DME/DME navigation.

At present, the position calculation in the DME/DME radio navigation adopts the following manner. A geometric relationship among known parameters, such as a ranging value of the DME beacon and altitude of the aircraft is utilized for calculation under an Earth-centered Earth-fixed (ECEF) coordinate system, and the result of the calculation is converted into a latitude-longitude-height (LLH) coordinate system to obtain a current position of the aircraft. Since the Earth is a complex sphere with an irregular surface, in the related art, an average radius of the Earth is utilized as a fixed value, and the altitude of the DME beacon and the altitude of the aircraft are ignored. Although this manner may achieve a required navigation performance smaller than 2 nautical miles, the unnecessary error is still introduced. With the increase of latitude, the actual radius of the Earth decreases and may differ from the radius at the equator by more than 20 kilometers. In this case, the positioning error would be further increased when the above fixed Earth radius is used. In order to address this large error, the radius of the earth at a known latitude may be approximated under the ECEF coordinates according to the latitude and the flattening on a basis of the world geodetic system 1984 (WGS 84) ellipsoid. This approximation inevitably brings errors that are hard to ignore. Moreover, since the radius of the earth at a current position of the aircraft cannot be accurately calculated, the positioning error is further increased.

**SUMMARY**

Embodiments of the present disclosure provide a method and an apparatus for calculating position information of aircraft, a computer device, and a storage medium. The position information of the aircraft can be calculated with higher accuracy.

A method for calculating position information of aircraft is provided according to embodiments of the present disclosure. The method comprises: obtaining first Gauss-Krüger coordinates and second Gauss-Krüger coordinates, each of which corresponds to a respective one of two distance measure equipments (DMEs); obtaining a first horizontal projection distance and a second horizontal projection distance, each of which is a horizontal projection of a slant distance between the aircraft and a respective one of the two DMEs; calculating Gauss-Krüger coordinates of the aircraft according to the first Gauss-Krüger coordinates, the second Gauss-Krüger coordinates, the first horizontal projection distance, and the second horizontal projection distance; and converting the Gauss-Krüger coordinates of the aircraft into current latitude-longitude coordinates of the aircraft.

An apparatus for calculating position information of aircraft is provided according to embodiments of the present disclosure. The apparatus comprises: an obtaining module, configured for obtaining first Gauss-Krüger coordinates and second Gauss-Krüger coordinates, each of which corresponds to a respective one of two DMEs, and obtaining a first horizontal projection distance and a second horizontal projection distance, each of which is a horizontal projection of a slant distance between the aircraft and a respective one of the two DMEs; a calculating module, configured for calculating Gauss-Krüger coordinates of the aircraft according to the first Gauss-Krüger coordinates, the second Gauss-Krüger coordinates, the first horizontal projection distance, and the second horizontal projection distance; and a converting module, configured for converting the Gauss-Krüger coordinates of the aircraft into current latitude-longitude coordinates of the aircraft.

A computer program product is provided according to embodiments of the present disclosure. The computer program product comprises a computer program, and the computer program when executed by a processor implements the above method for calculating position information of aircraft.

Herein the method and the apparatus for calculating the position information of the aircraft, a computer device, and a storage medium are provided according to embodiments of the present disclosure. First, the first Gauss-Krüger coordinates and the second Gauss-Krüger coordinates, each of which corresponds to a respective one of the two distance DMEs are obtained, and the first horizontal projection distance and the second horizontal projection distance, each of which is the horizontal projection of the slant distance between the aircraft and a respective one of the two DMEs, are obtained. Then, the Gauss-Krüger coordinates of the aircraft are calculated according to the first Gauss-Krüger coordinates, the second Gauss-Kriiger coordinates, the first horizontal projection distance, and the second horizontal projection distance. Afterwards, the Gauss-Krüger coordinates of the aircraft is converted into the current latitude-longitude coordinates of the aircraft. Compared with the related art in which the position of the aircraft is calculated through the Earth-centered Earth-fixed (ECEF) system, herein the Gauss-Krüger coordinates of the two DMEs and the altitude of the aircraft are combined to calculate the position of the aircraft, so that the accuracy of calculating the position information of the aircraft can be improved.

**BRIEF DESCRIPTION OF THE DRAWINGS**

FIG. 1 is a flow chart of a method for calculating position information of aircraft according to an embodiment of in the present disclosure.

FIG. 2 is a schematic diagram of a flow of calculating position information of aircraft according to an embodiment of in the present disclosure.

FIG. 3 is a schematic diagram of geometric calculation in a horizontal plane of a DME/DME positioning mode according to an embodiment of in the present disclosure.

FIG. 4 is a schematic block diagram of calculation in a DME/DME positioning mode according to an embodiment of in the present disclosure.

FIG. 5 is a schematic structural diagram of an apparatus for calculating position information of aircraft according to an embodiment of in the present disclosure.

FIG. 6 is a schematic diagram of a computer device according to an embodiment of in the present disclosure.

**DETAILED DESCRIPTION OF THE EMBODIMENTS**

Hereinafter technical solutions of the present disclosure are illustrated in detail using the drawings and specific embodiments for better understanding of the technical solutions. Embodiments of the present disclosure and specific features in the embodiments are intended for describing details of the technical solutions, rather than limiting the technical solutions.

Hereinafter parameters involved in the embodiments are illustrated for better understanding a method for calculating position information of aircraft.

(1) B, L, and H are position parameters of the aircraft and represent latitude, longitude, and altitude, respectively.

(2) Equatorial radius (a semi major axis) of a datum ellipsoid is denoted by a and is equal to 6378137 meters.

(3) The polar radius (a semi minor axis) of the datum ellipsoid is denoted by b and is equal to 63567523142meters.

(4) $\pi$ is equal to 3.1415926535897932.

(5) The flattening is equal to 298.257223563.

(6) First eccentricity of the datum ellipsoid is expressed as $e = \dfrac{\sqrt{a^2 - b^2}}{a}$ .

(7) First eccentricity of the datum ellipsoid is expressed as $e' = \dfrac{\sqrt{a^2 - b^2}}{b}$ .

(8) The square of the first eccentricity of the datum ellipsoid is expressed as $e^2 = 0.00669437999014$.

(9) The meridian radius of curvature is expressed as $M = a\left(1 - e^2\right)\left(1 - e^2 \sin^2 B\right)^{-\frac{3}{2}}$ .

(10) The prime vertical radius of curvature is expressed as $N = a\left(1 - e^2 \sin^2 B\right)^{-\frac{1}{2}}$ .

(11) The longitude of the central meridian $L_0$ (of a current 6-degree zone) is calculated as follows. The integer part of the longitude of a current position is divided by 6 to obtain a quotient, and the integer part of the quotient plus 1 is multiplied by 6 and then minus 3.

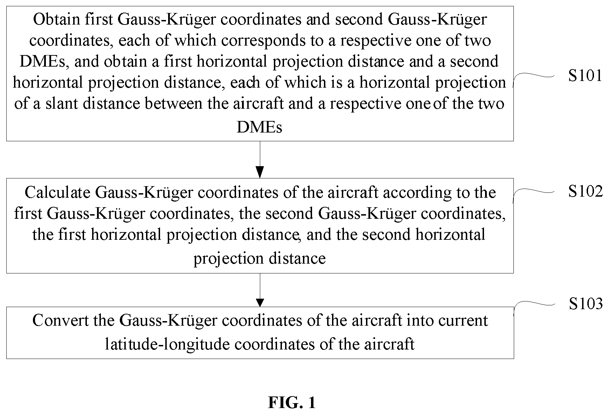

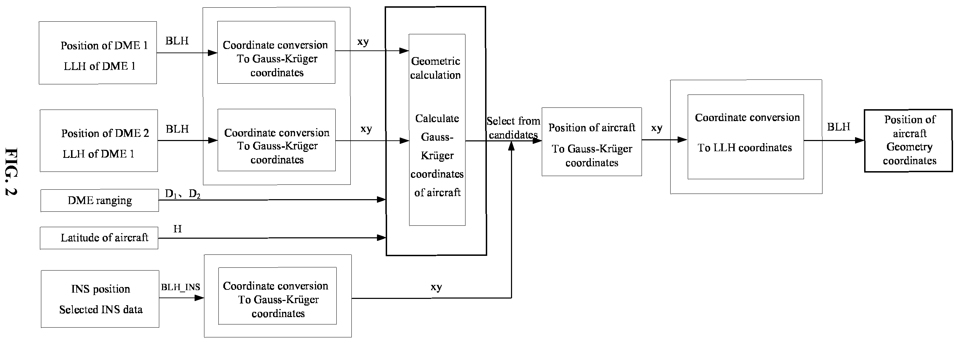

Reference is made to FIG. 1 and FIG. 2. A method for calculating position information of aircraft is provided according to an embodiment of the present disclosure. The method comprises steps S101 to S103.

In step S101, first Gauss-Krüger coordinates and second Gauss-Krüger coordinates, each of which corresponds to a respective one of two distance measure equipments (DMEs) are obtained, and a first horizontal projection distance and a second horizontal projection distance, each of which is a horizontal projection of a slant distance between the aircraft and a respective one of the two DMEs, are obtained.

When a DME/DME system is utilized for navigation, it is necessary to obtain the distances of the aircraft with respect to two DME beacons, so as to calculate an accurate position of the aircraft. Hence, it should be ensured that the aircraft can receive effective signals from the two DME stations at the same time. When the two DME beacons are available on a route of the aircraft, the coordinates, i.e., the latitude-longitude-height (LLH) coordinates, of DME beacon 1 and DME beacon 2 are obtained from a navigation database. Thereby, the aircraft can be positioned in a subsequent step using the altitude information, which is provided by an altimeter of the aircraft, and the ranging information, which is provided by the two DME beacons.

In an embodiment, under a precise DME/DME navigation mode, the computation involves Gauss-Krüger projection. Through an equation for forward conversion to Gauss-Krüger coordinates, the first Gauss-Kriiger coordinates and the second Gauss-Krüger coordinates of the two DMEs, i.e., $(x_1, y_1)$ and $(x_2, y_2)$ are calculated. In an embodiment, the results of $y_1$ and $y_2$ each is added with 500km, i.e., they are updated as $y_1 = y_1 + 500000$ and $y_2 = y_2 + 500000$ .

In an embodiment, the equation for forward conversion to Gauss-Krüger coordinates is express as Equation (1) (where the WGS 84 ellipsoid is taken as an example).

$$
\begin{aligned}
x_i = X &+ \frac{N}{2\rho''^2} \sin B_i \cos B_i \, l_i^2 \\
&+ \frac{N}{24\rho''^4} \sin B_i \cos^3 B_i \left(5 - t^2 + 9\eta^2 + 4\eta^4\right) l_i^4 \\
&+ \frac{N}{720\rho''^6} \sin B_i \cos^5 B_i \left(61 - 58t^2 + t^4\right) l_i^6 \\
y_i = \frac{N}{\rho''} &\cos B_i l_i + \frac{N}{6\rho''^3} \cos^3 B_i \left(1 - t^2 + \eta^2\right) l_i^3 \\
&+ \frac{N}{120\rho''^5} \cos^5 B_i \left(5 - 18t^2 + t^4 + 14\eta^2 - 58\eta^2 t^2\right) l_i^5
\end{aligned}
\tag{1}
$$

$X$ represents a length of a meridian arc from a current position to the equator. $N = a\left(1 - e^2 \sin^2 B_i\right)^{-\frac{1}{2}}$. $e2 =$ 0.00669437999014, which is the square of the first eccentricity of the WGS 84 ellipsoid. $\rho'' = 180 \times 60 \times 60 \,/\, pi$, where $pi$ represents $\pi$. $B_i$ is the latitude of an $i^{th}$ DME (beacon). $\eta = e' \cos B_i$. $e' = \dfrac{\sqrt{a^2 - b^2}}{b}$. $a = 6378137m$ represents the equatorial radius of the datum ellipsoid. $b = 6356752.3142m$ represents the polar radius of the datum ellipsoid. $t = tan$ ($Rad\_ B_i$), where $Rad\_B_i$ is the latitude of the $i^{th}$ DME expressed in radian units. $l_i = (L_i - L_0)/ \rho''$, where $L_i$ represents the longitude of the $i^{th}$ DME, $L_0$ is the longitude of the central meridian (of the 6-degree zone) of the $i^{th}$ DME. $L_0$ is calculated as follows. The integer part of the longitude of the $i^{th}$ DME is divided by 6 to obtain a quotient, and the integer part of the quotient plus 1 is multiplied by 6 and then minus 3.

$(x_i, y_i)$ represents the $i^{th}$ Gauss-Krüger coordinates, where i is equal to 1 or 2. That is, the first Gauss-Krüger coordinates $(x_1, y_1)$ and the second Gauss-Krüger coordinates $(x_2, y_2)$ are both calculated through equation (1). During calculation of the Gauss-Krüger coordinates $(x_i, y_i)$, the latitude $B_i$ and longitude $L_i$ of the corresponding DME need to be used.

In an embodiment, there are:

$$
A = \begin{bmatrix} 1 & \dfrac{1}{2} & \dfrac{3}{8} & \dfrac{5}{16} & \dfrac{35}{128} \\[2mm] 0 & \dfrac{1}{2} & \dfrac{1}{2} & \dfrac{15}{32} & \dfrac{7}{16} \\[2mm] 0 & 0 & \dfrac{1}{8} & \dfrac{3}{16} & \dfrac{7}{32} \\[2mm] 0 & 0 & 0 & \dfrac{1}{32} & \dfrac{1}{16} \\[2mm] 0 & 0 & 0 & 0 & \dfrac{1}{128} \end{bmatrix}, \quad M = \begin{bmatrix} m_0 \\ m_2 \\ m_4 \\ m_6 \\ m_8 \end{bmatrix} = \begin{bmatrix} a(1 - e^2) \\[1mm] \dfrac{3}{2}e^2 m_0 \\[1mm] \dfrac{5}{4}e^2 m_2 \\[1mm] \dfrac{7}{6}e^2 m_4 \\[1mm] \dfrac{9}{8}e^2 m_6 \end{bmatrix}, \quad \text{and } AA = A \cdot M = \begin{bmatrix} a_0 \\ a_2 \\ a_4 \\ a_6 \\ a_8 \end{bmatrix}.
$$

AA = A*M is a column of constants. The radius M of curvature of the meridian circle is expanded using Newton's binomial theorem up the $8^{th}$ term, and there is $M = a_0 - a_2 \cos 2B_i + a_4 \cos 4B_i - a_6 \cos 6B_i + a_8 \cos 8B_i$. Thus, the length of the meridian arc from current position to the equator is as expressed as follows:

$$
X = \int_0^{B_i} M dB_i = a_0 Rad\_ B_i - \frac{a_2}{2} \sin 2 Rad\_ B_i + \frac{a_4}{4} \sin 4 Rad\_ B_i - \frac{a_6}{6} \sin 6 Rad\_ B_i + \frac{a_8}{8} \sin 8 Rad\_ B_i,
$$

where $a_0$, $a_2$, $a_4$, $a_6$, and $a_8$ are constants as defined above.

$t = tan$ ($Rad\_ B_i$), and hence obtaining the first Gauss-Krüger coordinates and the second Gauss-Krüger coordinates of the two DMEs may comprise a following step.

The first Gauss-Krüger coordinates and the second Gauss-Krüger coordinates are calculated using the following equations.

$$
x_i = X + \frac{N}{2} t \cos^2 B_i l_i^2 + \frac{N}{24} t(5 - t^2 + 9\eta^2 + 4\eta^4) \cos^4 B_i l_i^4 + \frac{N}{720} t(61 - 58t^2 + t^4) \cos^6 B_i l_i^6
$$

$$
y_i = N \cos B_i l_i + \frac{N}{6}(1 - t^2 + \eta^2) \cos^3 B_i l_i^3 + \frac{N}{120}(5 - 18t^2 + t^4 + 14\eta^2 - 58\eta^2 t^2) \cos^5 B_i l_i^5
$$

In an embodiment, obtaining the first horizontal projection distance and the second horizontal projection distance of slant distances between the aircraft and the two DMEs may comprise the following step.

The first horizontal projection distance and the second horizontal projection distance are calculated using the following equations.

$$d_1 = \sqrt{R_1^2 - \left(H - H_1\right)^2}$$

$$d_2 = \sqrt{R_2^2 - \left(H - H_2\right)^2}$$

$d_1$ represents the first horizontal projection distance, $d_2$ represents the second horizontal projection distance, $H$ represents the height/altitude of the aircraft, $R_1$ and $R_2$ represent the respective slant distances between the aircraft and the two DMEs. $H_1$ and $H_2$ represent the respective heights of the two DMEs.

In step S102, Gauss-Krüger coordinates of the aircraft are calculated according to the first Gauss-Krüger coordinates, the second Gauss-Krüger coordinates, the first horizontal projection distance, and the second horizontal projection distance.

In an embodiment, calculating the Gauss-Krüger coordinates of the aircraft according to the first Gauss-Krüger coordinates, the second Gauss-Krüger coordinates, the first horizontal projection distance, and the second horizontal projection distance comprises a following step.

The Gauss-Krüger coordinates of the aircraft are calculated using following equations.

$$d_1^2 = \left(x - x_1\right)^2 + \left(y - y_1\right)^2$$

$$d_2^2 = \left(x - x_2\right)^2 + \left(y - y_2\right)^2$$

$(x, y)$ represents the Gauss-Krüger coordinates of the aircraft, $(x_1, y_1)$ represent the first Gauss-Kriiger coordinates, and the $(x_2, y_2)$ represent the second Gauss-Krüger coordinates.

Generally, there are two analytical solutions when solving the above two equations in practice. Hence, the Gauss-Krüger coordinates of the aircraft need to be selected from the solutions with reference to data from an inertial navigation system (INS). That is, an effective INS position is necessary for accurate calculation of the position in the DME/DME mode.

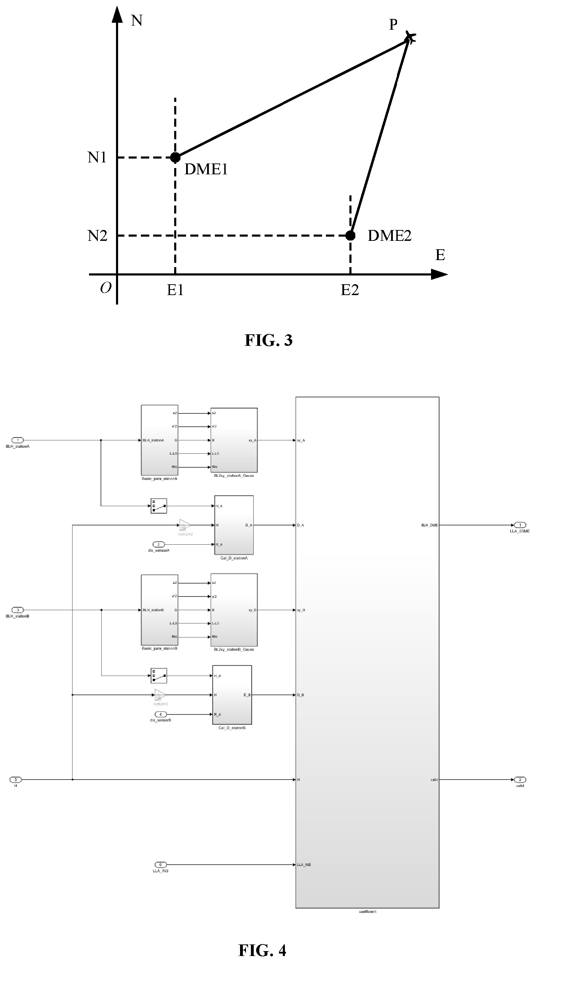

Herein the geometric relationship among the respective horizontal projection distances between the aircraft and the two DMEs and the Gauss-Krüger coordinates of the aircraft are as shown in FIG. 3. The actual Gauss-Krüger coordinates of the aircraft are selected according to the Gauss-Krüger coordinates of the INS position.

In step S103, the Gauss-Krüger coordinates of the aircraft are converted into current latitude-longitude coordinates of the aircraft.

In an embodiment, the Gaussian coordinates of the aircraft are calculated through backward conversion from Gaussian coordinates to obtain latitude-longitude coordinates, which comprises the following step.

The LLH coordinates (B, L, H) of the aircraft are calculated using the following equations. x in the equations has the original value as calculated in the above equations. The value of y is updated using y = y - 500000 before being substituted into the equations.

$$B = B_f - \frac{1}{2}V_f^2 t_f \left[ (\frac{y}{N_f})^2 - \frac{1}{12}(5 + 3t_f^2 + \eta_f^2 - 9\eta_f^2 t_f^2)(\frac{y}{N_f})^4 + \frac{1}{360}(61 + 90t_f^2 + 45t_f^4)(\frac{y}{N_f})^6 \right]$$

$$L = \frac{1}{\cos B_f} \left[ (\frac{y}{N_f}) - \frac{1}{6}(1 + 2t_f^2 + \eta_f^2)(\frac{y}{N_f})^3 + \frac{1}{120}(5 + 28t_f^2 + 24t_f^4 + 6\eta_f^2 + 8\eta_f^2 t_f^2)(\frac{y}{N_f})^5 \right] + L_0$$

$$B_f = \left[ x + (\frac{a_2}{2}\sin 2B_0 - \frac{a_4}{4}\sin 4B_0 + \frac{a_6}{6}\sin 6B_0 - \frac{a_8}{8}\sin 8B_0) \right] \Big/ a_0$$ . B and L represent the latitude and the longitude, respectively, of the aircraft. $V_f = \sqrt{1 + e'^2 \cos^2 B_f}$ , $t_f = \tan B_f$,

$N_f = a\left(1 - e^2 \sin^2 B_f\right)^{-\frac{1}{2}}$, $\eta_f^2 = e' \cos^2 B_f$, , and $B_0 = \frac{x}{2a} + \frac{\pi}{4}$ .

Hence, in order to address the large error in positioning under the ECEF coordinate system, the positioning algorithm for DME/DME radio navigation is proposed on a basis of the Gaussian-Krüger projection (Gauss-Krüger coordinates), which improves accuracy of the positioning in DME/DME radio navigation. The Gauss-Krüger coordinate system is established through taking the intersection of the central meridian and the equator as the origin, taking the projection of the central meridian as the ordinate axis X (of which the positive direction points north, and taking the projection of the equator as the abscissa axis Y (of which the positive direction points east). The projection of the Gauss-Krüger coordinate system is advantageous due to no deformation of the central meridian and no angular deformation (i.e., the shape preservation characteristics).

Herein the method for calculating the position information of the aircraft is provided according to embodiments of the present disclosure. First, the first Gauss-Krüger coordinates and the second Gauss-Krüger coordinates, each of which corresponds to a respective one of the two distance DMEs are obtained, and the first horizontal projection distance and the second horizontal projection distance, each of which is the horizontal projection of the slant distance between the aircraft and a respective one of the two DMEs, are obtained. Then, the Gauss-Krüger coordinates of the aircraft are calculated according to the first Gauss-Krüger coordinates, the second Gauss-Krüger coordinates, the first horizontal projection distance, and the second horizontal projection distance. Afterwards, the Gauss-Krüger coordinates of the aircraft is converted into the current latitude-longitude coordinates of the aircraft. Compared with the related art in which the position of the aircraft is calculated through the Earth-centered Earth-fixed (ECEF) system, herein the Gauss-Krüger coordinates of the two DMEs and the altitude of the aircraft are combined to calculate the position of the aircraft, so that the accuracy of calculating the position information of the aircraft can be improved.

In an application scenario, a model for calculating the position of the aircraft is constructed using the above method, and the internal structure of the model is as shown in FIG. 4. Main modules in the model are modules for calculating basic geometric parameters, calculating horizontal projection distances of the slant distances, the forward conversion to the Gaussians-Kriiger coordinates, calculating and selecting Gauss-Krüger coordinates of the aircraft, and the inverse conversion from the Gaussians-Krüger coordinates.

The above model was also subject to tests. Data of a flight route is utilized and fed into the model, and the result of the DME/DME positioning is compared with the INS positioning data. A part of the comparison result is as shown in Table 1. Table 1 shows that the positioning algorithm proposed herein and the model established accordingly have high accuracy.

Table 1

| Serial number | DME1 ranging | DME2 ranging | Latitude | Longitude | Latitude error | Longitude error |
|---|---|---|---|---|---|---|
| 1 | 1.6719 | 23.1016 | 31.2254 | 121.3380 | 0.0104 | 0.0047 |
| 2 | 1.8516 | 23.2656 | 31.2222 | 121.3349 | 0.0072 | 0.0015 |
| 3 | 1.7813 | 23.3438 | 31.2234 | 121.3334 | 0.0084 | 0.0001 |
| 4 | 2.0703 | 23.3906 | 31.2187 | 121.3321 | 0.0037 | 0.0012 |
| 5 | 2.2109 | 23.0078 | 31.2163 | 121.3362 | 0.0013 | 0.0029 |
| 6 | 2.5234 | 22.9844 | 31.2111 | 121.3366 | 0.0039 | 0.0033 |
| 7 | 2.5859 | 23.1719 | 31.2101 | 121.3330 | 0.0049 | 0.0003 |

The serial numbers of the steps in the foregoing embodiments do not indicate an order of executing these step. The order of execution of the processes shall depend on their functions and internal logic, and the serial numbers shall not be construed as any limitation on the implementations of the present disclosure.

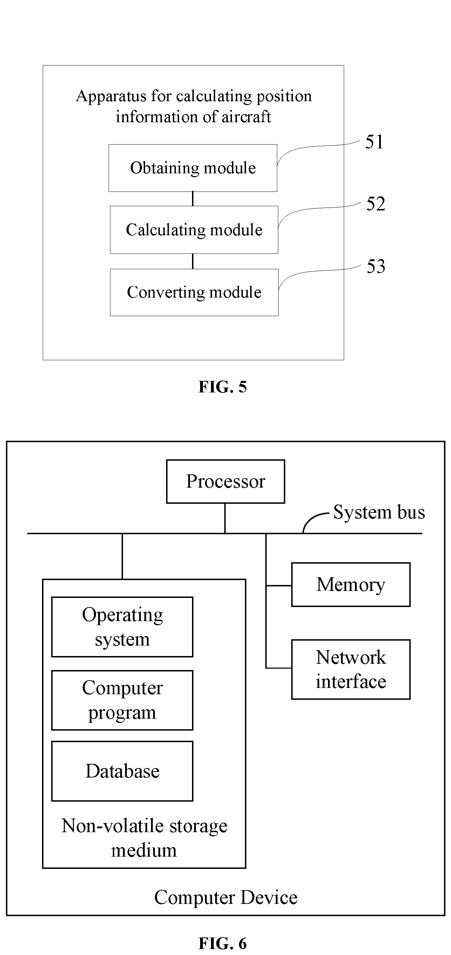

An apparatus for calculating position information of aircraft is further provided according to embodiments of the present disclosure. The apparatus corresponds to the method for calculating position information of aircraft in the foregoing embodiments. Reference is made to FIG. 5. Hereinafter the functional modules of the apparatus are described in detail as follows.

An obtaining module 51 is configured for: obtaining first Gauss-Krüger coordinates and second Gauss-Krüger coordinates, each of which corresponds to a respective one of two DMEs; and obtaining a first horizontal projection distance and a second horizontal projection distance, each of which is a horizontal projection of a slant distance between the aircraft and a respective one of the two DMEs.

A calculating module 52 is configured for calculating Gauss-Krüger coordinates of the aircraft according to the first Gauss-Krüger coordinates, the second Gauss-Krüger coordinates, the first horizontal projection distance, and the second horizontal projection distance.

A converting module 53 is configured for converting the Gauss-Krüger coordinates of the aircraft into current latitude-longitude coordinates of the aircraft.

In an embodiment, the obtaining module 51 is configured for calculating the first Gauss-Krüger coordinates and the second Gauss-Krüger coordinates through:

$$x_i = X + \frac{N}{2} t \cos^2 B_i l_i^2 + \frac{N}{24} t(5 - t^2 + 9\eta^2 + 4\eta^4) \cos^4 B_i l_i^4 + \frac{N}{720} t(61 - 58t^2 + t^4) \cos^6 B_i l_i^6$$

$$y_i = N \cos B_i l_i + \frac{N}{6}(1 - t^2 + \eta^2) \cos^3 B_i l_i^3 + \frac{N}{120}(5 - 18t^2 + t^4 + 14\eta^2 - 58\eta^2 t^2) \cos^5 B_i l_i^5$$

where $X$ represents a length of a meridian arc from a current position to the equator, $B_i$ represents latitude of an $i^{th}$ DME, $N = a\left(1 - e^2 \sin^2 B_i\right)^{-\frac{1}{2}}$, $l_i = (L_i - L_0)/\rho''$, $L_i$ represents the longitude of the $i^{th}$ DME, $L_0$ is the longitude of the central meridian of a 6-degree zone in which the $i^{th}$ DME is located, $\eta = e' \cos B_i$, $e = \dfrac{\sqrt{a^2 - b^2}}{a}$, $e' = \dfrac{\sqrt{a^2 - b^2}}{b}$, $a$

represents an equatorial radius of a datum ellipsoid, b represents a polar radius of the datum ellipsoid, $(x_i, y_i)$ represents the $i^{th}$ Gauss-Krüger coordinates, and i is equal to 1 or 2.

In an embodiment, the length of the meridian arc from the current position to the equator is calculated through:

$$X = \int_0^{B_i} M dB_i = a_0 Rad\_B_i - \frac{a_2}{2} \sin 2Rad\_B_i + \frac{a_4}{4} \sin 4Rad\_B_i - \frac{a_6}{6} \sin 6Rad\_B_i + \frac{a_8}{8} \sin 8Rad\_B_i$$

and $M = a_0 - a_2 \cos 2B_i + a_4 \cos 4B_i - a_6 \cos 6B_i + a_8 \cos 8B_i$,
where $a_0$, $a_2$, $a_4$, $a_6$, and $a_8$ are preset constants.

In an embodiment, the obtaining module 51 is configured for calculating the first horizontal projection distance and the second horizontal projection distance through:

$$d_1 = \sqrt{R_1^2 - (H - H_1)^2}$$

$$d_2 = \sqrt{R_2^2 - (H - H_2)^2}$$

where $d_1$ represents the first horizontal projection distance, $d_2$ represents the second horizontal projection distance, $H$ represents height of the aircraft, each of $R_1$ and $R_2$ represent the slant distance between the aircraft and a respective one of the two DMEs, $H_1$ and $H_2$ represent respective heights of the two DMEs.

In an embodiment, the calculating module 52 is configured for calculating the Gauss-Kriiger coordinates of the aircraft through:

$$d_1^2 = (x - x_1)^2 + (y - y_1)^2$$

$$d_2^2 = (x - x_2)^2 + (y - y_2)^2$$

where $(x, y)$ represent the Gauss-Krüger coordinates of the aircraft, $(x_1, y_1)$ represent the first Gauss-Kriiger coordinates, and the $(x_2, y_2)$ represent the second Gauss-Krüger coordinates.

In an embodiment, the Gauss-Krüger coordinates of the aircraft are selected from candidates with reference to data from an inertial navigation system.

In an embodiment, the converting module 53 is configured for calculating the current latitude-longitude coordinates of the aircraft through:

$$B = B_f - \frac{1}{2}V_f^2 t_f \left[ (\frac{y}{N_f})^2 - \frac{1}{12}(5 + 3t_f^2 + \eta_f^2 - 9\eta_f^2 t_f^2)(\frac{y}{N_f})^4 + \frac{1}{360}(61 + 90t_f^2 + 45t_f^4)(\frac{y}{N_f})^6 \right]$$

$$L = \frac{1}{\cos B_f} \left[ (\frac{y}{N_f}) - \frac{1}{6}(1 + 2t_f^2 + \eta_f^2)(\frac{y}{N_f})^3 + \frac{1}{120}(5 + 28t_f^2 + 24t_f^4 + 6\eta_f^2 + 8\eta_f^2 t_f^2)(\frac{y}{N_f})^5 \right] + L_0$$

where $B_f = \left[ x + (\frac{a_2}{2}\sin 2B_0 - \frac{a_4}{4}\sin 4B_0 + \frac{a_6}{6}\sin 6B_0 - \frac{a_8}{8}\sin 8B_0) \right] \Big/ a_0$ , B and L represent the latitude and the longitude, respectively, of the aircraft, $V_f = \sqrt{1 + e'^2 \cos^2 B_f}$ , $t_f = \tan B_f$, $N_f = a\left(1 - e^2 \sin^2 B_f\right)^{-\frac{1}{2}}$, $\eta_f^2 =$

$e'\cos^2 B_f$, and $B_0 = \frac{x}{2a} + \frac{\pi}{4}$ . The value of $B_0 = \frac{x}{2a} + \frac{\pi}{4}$ is obtained though iteration method, and the value of $B_f$ approximates x/a.

Details of the apparatus for calculating position information of the aircraft may refer to those in the foregoing embodiments of the method for calculating position information of the aircraft and are not repeated herein. The modules in the apparatus may be implemented in whole or in part through software, hardware, or a combination of the two. The modules may be embedded in or independent of a processor in a computer device as hardware, or they may be stored in a memory of a computer device as software, so that the processor can invoke the modules to perform their corresponding operations.

A computer device is provided according to an embodiment of the present disclosure. The computer device may be a server, and an internal structural diagram of the computer device may be as shown in FIG. 6. The computer device comprises a processor, a storage, a network interface, and a database, which are connected via a system bus. The processor is configured to provide a capability of computation and control. The memory comprises a non-volatile storage medium and an internal memory. The non-volatile storage medium is configured to store an operating system, a computer program, and a database. The internal memory is configured to provide an environment for operation of the operating system and the computer programs in non-volatile storage media. The network interface is configured to communicate with an external terminal via network connection. The computer program is configured to be executed by the processor to implement the method for calculating position information of the aircraft.

In an embodiment, a computer device is provided. The computer comprises a memory, a processor, and a computer program which is stored on the memory and is capable of being executed by the processor. The computer program when executed by the processor implements following steps.

First Gauss-Krüger coordinates and second Gauss-Krüger coordinates, each of which corresponds to a respective one of two distance measure equipments (DMEs) are obtained. A first horizontal projection distance and a second horizontal projection distance, each of which is a horizontal projection of a slant distance between the aircraft and a respective one of the two DMEs, are obtained.

Gauss-Krüger coordinates of the aircraft are calculated according to the first Gauss-Krüger coordinates, the second Gauss-Krüger coordinates, the first horizontal projection distance, and the second horizontal projection distance.

The Gauss-Krüger coordinates of the aircraft are converted into current latitude-longitude coordinates of the aircraft.

A computer-readable storage medium is further provided according to an embodiment of the present disclosure. A computer program is stored on the computer-readable storage medium, and the computer program when executed by a processor implements following steps.

First Gauss-Krüger coordinates and second Gauss-Krüger coordinates, each of which corresponds to a respective one of two distance measure equipments (DMEs) are obtained. A first horizontal projection distance and a second horizontal projection distance, each of which is a horizontal projection of a slant distance between the aircraft and a respective one of the two DMEs, are obtained.

Gauss-Krüger coordinates of the aircraft are calculated according to the first Gauss-Kriiger coordinates, the second Gauss-Krüger coordinates, the first horizontal projection distance, and the second horizontal projection distance.

The Gauss-Krüger coordinates of the aircraft are converted into current latitude-longitude coordinates of the aircraft.

A computer program product is further provided according to an embodiment of the present disclosure. The computer program product comprises a computer program, and the computer program when executed by a processor implements following steps.

First Gauss-Krüger coordinates and second Gauss-Krüger coordinates, each of which corresponds to a respective one of two distance measure equipments (DMEs) are obtained. A first horizontal projection distance and a second horizontal projection distance, each of which is a horizontal projection of a slant distance between the aircraft and a respective one of the two DMEs, are obtained.

Gauss-Krüger coordinates of the aircraft are calculated according to the first Gauss-Krüger coordinates, the second Gauss-Krüger coordinates, the first horizontal projection distance, and the second horizontal projection distance.

The Gauss-Krüger coordinates of the aircraft are converted into current latitude-longitude coordinates of the aircraft.

Those skilled in the art may understand that all or a part of a process in the method(s) illustrated in the foregoing embodiments may be implemented through instructing relevant hardware through a computer program, and the computer program may be stored in a non-volatile computer-readable storage medium. The computer program when executed may implement a flow as illustrated in each method embodiment. Herein any reference to a memory, a storage, a database, or another medium used in any embodiment of the present disclosure may include a non-volatile memory and/or a volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random-access memory (RAM) or an external cache memory. Illustratively rather than restrictively, the RAM may be in a variety of forms, such as a static RAM (SRAM), a dynamic RAM (DRAM), a synchronous DRAM (SDRAM), a dual data rate SDRAM (DDRSDRAM), an enhanced SDRAM (ESDRAM), a synch link DRAM (SLDRAM), a memory bus (Rambus) direct RAM (RDRAM), a direct memory bus dynamic RAM (DRDRAM), and a memory bus dynamic RAM (RDRAM), or the like.

Those skilled in the art may clearly appreciate that for the sake of conciseness and brevity of description, the division of the aforementioned functional units and/or modules is merely exemplary. In practice, the aforementioned functional units and/or modules may be assigned to different functional units or different modules on requirement. That is, an internal structure of the apparatus may be divided into different functional units or modules to complete all or a part of the aforementioned functions.

The above embodiments are only intended for illustrating rather than limiting technical solutions of the present disclosure. Although the present disclosure has been described in detail with reference to the foregoing embodiments, those skilled in the art may appreciate that the technical solutions recorded in the foregoing embodiments may be modified or some of the technical features in the solutions may be replaced, and these modifications or replacements shall fall within the scope of protection of the present disclosure as long as they do not make an essence of the corresponding technical solutions depart from a spirit and a scope of the original technical solutions in the embodiments of the present disclosure.

## Claims

1.   A method for calculating position information of aircraft, comprising:

    obtaining first Gauss-Krüger coordinates and second Gauss-Krüger coordinates, each of which corresponds to a respective one of two distance measure equipments (DMEs), and obtaining a first horizontal projection distance and a second horizontal projection distance, each of which is a horizontal projection of a slant distance between the aircraft and a respective one of the two DMEs;
    calculating Gauss-Krüger coordinates of the aircraft according to the first Gauss-Krüger coordinates, the second Gauss-Krüger coordinates, the first horizontal projection distance, and the second horizontal projection distance; and
    converting the Gauss-Krüger coordinates of the aircraft into current latitude-longitude coordinates of the aircraft.

2.   The method of claim 1, wherein obtaining the first Gauss-Krüger coordinates and the second Gauss- Krüger coordinates, each of which corresponds to the respective one of the two DMEs, comprises:

    calculating the first Gauss-Kriiger coordinates and the second Gauss-Krüger coordinates through:

$$x_i = X + \frac{N}{2} t \cos^2 B_i l_i^2 + \frac{N}{24} t (5 - t^2 + 9\eta^2 + 4\eta^4) \cos^4 B_i l_i^4 + \frac{N}{720} t (61 - 58t^2 + t^4) \cos^6 B_i l_i^6$$

$$y_i = N\cos B_i l_i + \frac{N}{6}(1 - t^2 + \eta^2)\cos^3 B_i l_i^3 + \frac{N}{120}(5 - 18t^2 + t^4 + 14\eta^2 - 58\eta^2 t^2)\cos^5 B_i l_i^5$$

,

wherein $X$ represents a length of a meridian arc from a current position to the equator, $B_i$ represents latitude of an

$i^{th}$ DME, $N = a\left(1 - e^2\sin^2 B_i\right)^{-\frac{1}{2}}$, $l_i = (L_i - L_0)/\rho''$, $L_i$ represents the longitude of the $i^{th}$ DME, $L_0$ is the longitude

of the central meridian of a 6-degree zone in which the $i^{th}$ DME is located, $\eta = e'\cos B_i$,

$e = \dfrac{\sqrt{a^2 - b^2}}{a}$, $e' = \dfrac{\sqrt{a^2 - b^2}}{b}$, $a$ represents an equatorial radius of a datum ellipsoid, $b$ represents a polar radius of the datum ellipsoid, $(x_i, y_i)$ represents the $i^{th}$ Gauss-Krüger coordinates, and i is equal to 1 or 2.

3. The method of claim 2, wherein the length of the meridian arc from the current position to the equator is calculated through:

$$X = \int_0^{B_i} M dB_i = a_0 Rad\_B_i - \frac{a_2}{2}\sin 2Rad\_B_i + \frac{a_4}{4}\sin 4Rad\_B_i - \frac{a_6}{6}\sin 6Rad\_B_i + \frac{a_8}{8}\sin 8Rad\_B_i$$

and

$$M = a_0 - a_2\cos 2B_i + a_4\cos 4B_i - a_6\cos 6B_i + a_8\cos 8B_i,$$

wherein $a_0$, $a_2$, $a_4$, $a_6$, and $a_8$ are preset constants.

4. The method of claim 1, wherein obtaining the first horizontal projection distance and the second horizontal projection distance, each of which is the horizontal projection of the slant distance between the aircraft and the respective one of the two DMEs, comprises:

calculating the first horizontal projection distance and the second horizontal projection distance through:

$$d_1 = \sqrt{R_1^2 - \left(H - H_1\right)^2}$$

$$d_2 = \sqrt{R_2^2 - \left(H - H_2\right)^2},$$

wherein $d_1$ represents the first horizontal projection distance, $d_2$ represents the second horizontal projection distance, $H$ represents height of the aircraft, each of $R_1$ and $R_2$ represent the slant distance between the aircraft and a respective one of the two DMEs, $H_1$ and $H_2$ represent respective heights of the two DMEs.

5. The method of claim 2, wherein calculating the Gauss-Krüger coordinates of the aircraft according to the first Gauss-Krüger coordinates, the second Gauss-Krüger coordinates, the first horizontal projection distance, and the second horizontal projection distance comprises:

calculating the Gauss-Krüger coordinates of the aircraft through:

$$d_1^2 = \left(x - x_1\right)^2 + \left(y - y_1\right)^2$$

$$d_2^2 = \left(x - x_2\right)^2 + \left(y - y_2\right)^2$$

wherein $(x, y)$ represent the Gauss-Krüger coordinates of the aircraft, $(x_1, y_1)$ represent the first Gauss-Krüger coordinates, and the $(x_2, y_2)$ represent the second Gauss-Krüger coordinates.

6. The method of claim 4, further comprising:
selecting the Gauss-Krüger coordinates of the aircraft from candidates with reference to data from an inertial navigation system.

7. The method of claim 3, wherein converting the Gauss-Krüger coordinates of the aircraft into the current latitude-longitude coordinates of the aircraft comprises:

calculating the current latitude-longitude coordinates of the aircraft through:

$$B = B_f - \frac{1}{2}V_f^2 t_f \left[ (\frac{y}{N_f})^2 - \frac{1}{12}(5 + 3t_f^2 + \eta_f^2 - 9\eta_f^2 t_f^2)(\frac{y}{N_f})^4 + \frac{1}{360}(61 + 90t_f^2 + 45t_f^4)(\frac{y}{N_f})^6 \right]$$

$$L = \frac{1}{\cos B_f} \left[ (\frac{y}{N_f}) - \frac{1}{6}(1 + 2t_f^2 + \eta_f^2)(\frac{y}{N_f})^3 + \frac{1}{120}(5 + 28t_f^2 + 24t_f^4 + 6\eta_f^2 + 8\eta_f^2 t_f^2)(\frac{y}{N_f})^5 \right] + L_0$$
,

wherein $B_f = \left[ x + (\frac{a_2}{2}\sin 2B_0 - \frac{a_4}{4}\sin 4B_0 + \frac{a_6}{6}\sin 6B_0 - \frac{a_8}{8}\sin 8B_0) \right] \Big/ a_0$ , B and L represent the latitude and the longitude, respectively, of the aircraft, $V_f = \sqrt{1 + e'^2 \cos^2 B_f}$ , , $t_f$ = tan $B_f$ ,

$N_f = a\left(1 - e^2 \sin^2 B_f\right)^{-\frac{1}{2}}$ , $\eta_f^2$ = e' cos² $B_f$, and $B_0 = \frac{x}{2a} + \frac{\pi}{4}$ .

8. An apparatus for calculating position information of aircraft, comprising:

an obtaining module, configured for:

obtaining first Gauss-Krüger coordinates and second Gauss-Krüger coordinates, each of which corresponds to a respective one of two DMEs, and
obtaining a first horizontal projection distance and a second horizontal projection distance, each of which is a horizontal projection of a slant distance between the aircraft and a respective one of the two DMEs;

a calculating module, configured for calculating Gauss-Krüger coordinates of the aircraft according to the first Gauss-Krüger coordinates, the second Gauss-Krüger coordinates, the first horizontal projection distance, and the second horizontal projection distance; and
a converting module, configured for converting the Gauss-Krüger coordinates of the aircraft into current latitude-longitude coordinates of the aircraft.

9. A computer device, comprising:

a memory,
a processor, and
a computer program stored in the memory, wherein the computer program is executable on the processor, and the computer program when executed by the processor implements the method of any one of claims 1 to 7.

10. A computer-readable storage medium, storing a computer program, wherein the computer program when executed by a processor implements the method of any one of claims 1 to 7.

Obtain first Gauss-Krüger coordinates and second Gauss-Krüger coordinates, each of which corresponds to a respective one of two DMEs, and obtain a first horizontal projection distance and a second horizontal projection distance, each of which is a horizontal projection of a slant distance between the aircraft and a respective one of the two DMEs

S101

Calculate Gauss-Krüger coordinates of the aircraft according to the first Gauss-Krüger coordinates, the second Gauss-Krüger coordinates, the first horizontal projection distance, and the second horizontal projection distance

S102

Convert the Gauss-Krüger coordinates of the aircraft into current latitude-longitude coordinates of the aircraft

S103

**FIG. 1**

FIG. 2

**FIG. 3**

**FIG. 4**

Apparatus for calculating position information of aircraft

Obtaining module — 51

Calculating module — 52

Converting module — 53

**FIG. 5**

Processor

System bus

Memory

Operating system

Computer program

Database

Non-volatile storage medium

Network interface

Computer Device

**FIG. 6**

## INTERNATIONAL SEARCH REPORT

| International application No. |
|---|
| **PCT/CN2024/108105** |

### A. CLASSIFICATION OF SUBJECT MATTER

G01S5/02(2010.01)i

According to International Patent Classification (IPC) or to both national classification and IPC

### B. FIELDS SEARCHED

Minimum documentation searched (classification system followed by classification symbols)

IPC: G01S, G01C, G06F

Documentation searched other than minimum documentation to the extent that such documents are included in the fields searched

Electronic data base consulted during the international search (name of data base and, where practicable, search terms used)

CNTXT, CNKI, ENTXTC, ENTXT, WPABSC, WPABS, DWPI: 中国商用飞机有限责任公司北京民用飞机技术研究中心, 中国商用飞机有限责任公司, 隋政, 白志强, 薛勇, 赵广涛, 李超群, 于丰玮, 飞机, 飞行, 位置, 方位, 测距, 斜距, 距离, 长度, 高斯, 平面, 坐标, 投影, 反算, 经纬度, 转换, 经度, 纬度, 基准, 椭球, 弧度, 子午线, 赤道, DME, aircraft, flight, position, orientation, range, find, pitch, distance, length, Gaussian, plane, coordinate, projection, back, calculation, transform, longitude, latitude, datum, ellipsoid, arc, meridian, equator

### C. DOCUMENTS CONSIDERED TO BE RELEVANT

| Category* | Citation of document, with indication, where appropriate, of the relevant passages | Relevant to claim No. |
|---|---|---|
| PX | CN 117491945 A (COMAC BEIJING AERONAUTICAL SCIENCE & TECHNOLOGY RESEARCH INSTITUTE (BASTRI) et al.) 02 February 2024 (2024-02-02) claims 1-10 | 1-10 |
| A | US 3975731 A (GRUMMAN AEROSPACE CORP.) 17 August 1976 (1976-08-17) description, column 1, line 4-column 2, line 40, and figures 1-4 | 1-10 |
| A | CN 104900091 A (NO.51 RESEARCH INSTITUTE OF CHINA ELECTRONICS TECHNOLOGY GROUP CORP.) 09 September 2015 (2015-09-09) entire document | 1-10 |
| A | CN 106291462 A (FRIENDS FLY NETWORK LTD.) 04 January 2017 (2017-01-04) entire document | 1-10 |
| A | CN 109191373 A (SOUTH CHINA AGRICULTURAL UNIVERSITY) 11 January 2019 (2019-01-11) entire document | 1-10 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 October 2024** | **13 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/108105** |

**C. DOCUMENTS CONSIDERED TO BE RELEVANT**

| Category* | Citation of document, with indication, where appropriate, of the relevant passages | Relevant to claim No. |
| --- | --- | --- |
| A | US 3659085 A (SIERRA RESEARCH CORP.) 25 April 1972 (1972-04-25)<br>entire document | 1-10 |
| A | US 3821523 A (SIERRA RESEARCH CORP.) 28 June 1974 (1974-06-28)<br>entire document | 1-10 |
| A | US 4583177 A (ROCKWELL INTERNATIONAL CORP.) 15 April 1986 (1986-04-15)<br>entire document | 1-10 |
| A | US 4899161 A (INTERNATIONAL BUSINESS MACHINES CORP.) 06 February 1990<br>(1990-02-06)<br>entire document | 1-10 |

Form PCT/ISA/210 (second sheet) (July 2022)

# EP 4 764 587 A1

**INTERNATIONAL SEARCH REPORT**
Information on patent family members

International application No.

**PCT/CN2024/108105**

| Patent document cited in search report | | | Publication date (day/month/year) | Patent family member(s) | | | Publication date (day/month/year) |
|---|---|---|---|---|---|---|---|
| CN | 117491945 | A | 02 February 2024 | None | | | |
| US | 3975731 | A | 17 August 1976 | DE | 2554301 | A1 | 16 June 1976 |
| | | | | NL | 7514394 | A | 14 June 1976 |
| | | | | GB | 1517329 | A | 12 July 1978 |
| | | | | FR | 2294453 | A1 | 09 July 1976 |
| | | | | IT | 1052549 | B | 20 July 1981 |
| CN | 104900091 | A | 09 September 2015 | None | | | |
| CN | 106291462 | A | 04 January 2017 | None | | | |
| CN | 109191373 | A | 11 January 2019 | None | | | |
| US | 3659085 | A | 25 April 1972 | IL | 36607 | A0 | 28 July 1971 |
| US | 3821523 | A | 28 June 1974 | None | | | |
| US | 4583177 | A | 15 April 1986 | FR | 2538560 | A1 | 29 June 1984 |
| | | | | FR | 2538560 | B1 | 07 August 1987 |
| US | 4899161 | A | 06 February 1990 | CA | 1326282 | C | 18 January 1994 |
| | | | | JPH | 02140681 | A | 30 May 1990 |
| | | | | JP | 2516257 | B2 | 24 July 1996 |
| | | | | DE | 68920218 | D1 | 09 February 1995 |
| | | | | DE | 68920218 | T2 | 29 June 1995 |
| | | | | EP | 0351654 | A2 | 24 January 1990 |
| | | | | EP | 0351654 | B1 | 28 December 1994 |

Form PCT/ISA/210 (patent family annex) (July 2022)